# EUROPEAN PATENT APPLICATION

(11) **EP 1 884 867 A1**
(43) Date of publication of application: **06.02.2008**
(21) Application number: 07100201.8
(22) Date of filing: 08.01.2007
(51) Int. Cl.: G06F 1/32, H04M 1/73, G09G 3/32

(54) **Mobile terminal and control method thereof**

(30) Priority: 03.08.2006 KR 20060073364
(71) Applicant: Samsung SDI Co., Ltd., Suwon-si Gyeonggi-do (KR)
(72) Inventor: Kim, Jin Hun Legal & IP Team, Kiheung-eup, Yongin-si Gyeonggi-do (KR); Chung, Ji Seon Legal & IP Team, Kiheung-eup, Yongin-si Gyeonggi-do (KR); Lee, Ji Yoon Legal & IP Team, Kiheung-eup, Yongin-si Gyeonggi-do (KR)
(74) Representative: Hengelhaupt, Jürgen

(57) **Abstract**

A mobile terminal is disclosed. In one embodiment, the mobile terminal includes a display implemented by using an organic light emitting display device, a memory storing a graphic user interface (GUI) of low brightness, a key input unit to enable the input of whether the graphic user interface of low brightness can be used, a light quantity detector detecting light quantity from the external and a controller converting and establishing into the graphic user interface stored in the memory depending on a use selection of the graphic user interface or the light quantity value detected in the light quantity detector.

## Description

### BACKGROUND

### 1. Field of the Invention

The present invention relates to a mobile terminal, and more particularly to a mobile terminal and a control method thereof, wherein the mobile terminal adopts a self-emissive display such as an organic light emitting display device and provides a plurality of graphic user interfaces including a graphic user interface of low brightness.

### 2. Discussion of the Related Technology

A liquid crystal display (LCD) device has frequently been used as a display for a mobile terminal. A method of reducing the brightness of a backlight has been proposed in order to eliminate poor visibility caused by excessive brightness in such a mobile terminal.

However, since the LCD device can display a predetermined image only by providing a backlight, it has the disadvantage that visibility of the display degrades as the brightness of the backlight is reduced so that it is very difficult to effectively display an image. Furthermore, when the backlight is turned off, the LCD device cannot display an image.

Also, while the backlight of the LCD device is turned on, power consumption is substantially the same when the image displayed through the LCD device is a black tone or a white tone. Thus, it is disadvantageous that even though the brightness of the display recognized by a user is reduced, substantially the same amount of power is consumed.

Further, since the LCD device requires a backlight source, it runs counter to the trends of miniaturization, profile and weight reduction of the mobile terminal.

### SUMMARY OF CERTAIN INVENTIVE EMBODIMENTS

According to the present invention a mobile terminal and a control method thereof are provided, which in the mobile terminal adopts a self emissive display such as an organic light emitting display device, wherein the mobile terminal is configured to provide different graphic user interfaces to be used under different ambient light conditions, such as places capable of assuring visibility even at a low display brightness such as in dark places thereby eliminating inconvenience due to high brightness, and reducing power consumption. To achieve the foregoing, a plurality of graphic user interfaces (GUIs) having different display brightness is provided and at least one of the plurality of graphic user interfaces as a GUI having a low brightness is implemented.

According to a first aspect of the invention a mobile terminal is provided, the mobile terminal comprising: a display configured to display an image and adapted to be implemented is a display device, such as an organic light emitting display device; a memory configured to store a graphic user interface (GUI) of low brightness, a key inputting unit inputting whether the graphic user interface of low brightness can be used, a light quantity detector detecting light quantity from the external and a controller converting and establishing into the graphic user interface stored in the memory depending on a use selection of the graphic user interface or the light quantity value detected in the light quantity detector.

The graphic user interface of low brightness may be implemented by converting a background screen of high brightness occupying many regions of a screen into low brightness and converting an image or a text portion of low brightness occupying a specified region of the screen into high brightness, and more particularly, it can be implemented so that in a whole screen displayed on the display, the brightness of R, G and B sub-pixels constituting each pixel corresponding to the background screen is to be below about 1 cd/m², and the brightness of R, G and B sub-pixels constituting each pixel corresponding to the portions displaying the image or the text is to be about 10 to about 300 cd/m².

According to a second aspect of the invention a mobile terminal is disclosed, the mobile terminal comprising: a self-emissive display unit configured to display an image; a memory configured to store first and second image portions, wherein the first image portion is adapted to display an image at a first brightness and the second image portion is adapted to display an image at a second brightness different from the first brightness; and a controller configured to select one of the first and second image portions.

Preferably the first brightness is greater than the second brightness. Preferably the controller is further configured to select one of the two image portions based on user input. Preferably the mobile terminal further comprises an input unit configured to receive user input so as to select the second image portion. Preferably the mobile terminal further comprises a sensor configured to detect an ambient brightness level. Preferably, when the detected level is less than a reference level, the controller is further configured to select the second image portion. Preferably the second brightness is less than about 1 cd/m². Preferably the first brightness is in the range of about 10 to about 300 cd/m². Preferably the self-emissive display unit is an organic light emitting display unit.

According to a third aspect of the invention a control method of a mobile terminal is disclosed, the method comprising: inputting a use selection of a graphic user interface of low brightness, converting and establishing a graphic user interface presently displayed depending on the input of the use selection of the graphic user interface of low brightness into the graphic user interface of low brightness and displaying the converted and established graphic user interface of low brightness on a display implemented as a self-emission element.

According to a fourth aspect of the invention a control method of a mobile terminal is disclosed, the method comprising: detecting light quantity from the external by a light quantity detector, comparing the detected light quantity value with a preset reference value, converting and establishing into a graphic user interface of low brightness pre-stored, if the detected light quantity value is below the reference value by being compared with the reference value and displaying the converted and established graphic user interface of low brightness on a display implemented as a self-emission element.

According to a fifth aspect of the invention a method of controlling a mobile terminal is disclosed, the method, comprising: displaying, at a self-emissive display unit, an image which includes a background portion and a non-background portion; and controlling the self-emissive display unit such that the brightness of the non-background portion is higher than that of the background portion. Preferably the method further comprises: receiving user input, wherein the controlling is performed based on the user input. Preferably the method further comprises: detecting an ambient brightness level, wherein the controlling is performed based on the detecting.

According to a sixth aspect of the invention a mobile terminal is disclosed, the mobile terminal comprising: a self-emissive display unit configured to display an image which includes a background portion and a non-background portion; and a controller configured to control the self-emissive display unit such that the brightness of the non-background portion is higher than that of the background portion.

Preferably the brightness of the background portion is less than or equal to about 1 cd/m². Preferably the brightness of the non-background section is in the range of about 10 to about 300 cd/m². Preferably the non-background portion includes at least one of the following: a stilled image, a video image and text. Preferably the mobile terminal further comprises: an input unit configured to receive user input, wherein the controller is further configured to control the self-emissive display unit based on the received user input. Preferably the self-emissive display unit is an organic light emitting display unit.

According to a seventh aspect of the invention a mobile terminal is disclosed, the mobile terminal comprising: a self-emissive display unit configured to display an image; a memory configured to store first and second image portions, wherein the first image portion is adapted to display an image at a first brightness and the second image portions is adapted to display an image at a second brightness different from the first brightness; an input unit configured to receive user input so as to select the second image portion; a sensor configured to detect an ambient brightness level; and a controller configured to select one of the first and second image portions based on at least one of the user input and the detected level. Preferably the second brightness is less than about 1 cd/m² and the first brightness is in the range of about 10 to about 300 cd/m².

### BRIEF DESCRIPTION OF THE DRAWINGS

These and/or other aspects of the invention will become apparent and more readily appreciated from the following description of embodiments, taken in conjunction with the accompanying drawings.

FIG. 1 a block diagram showing a construction of a mobile terminal according to an embodiment of the present invention.

FIG. 2 is a block diagram showing a construction of an organic light emitting display panel as a display shown in FIG. 1.

FIG. 3 is a cross-sectional view of a specified region (I-I') in FIG. 2.

FIG. 4 is a flowchart illustrating a control method of a mobile terminal according to an embodiment of the present invention.

FIG. 5 is a flowchart illustrating a control method of a mobile terminal according to another embodiment of the present invention.

### DETAILED DESCRIPTION OF CERTAIN INVENTIVE EMBODIMENTS

Hereinafter, embodiments of the present invention will be described in a more detailed manner with reference to the accompanying drawings.

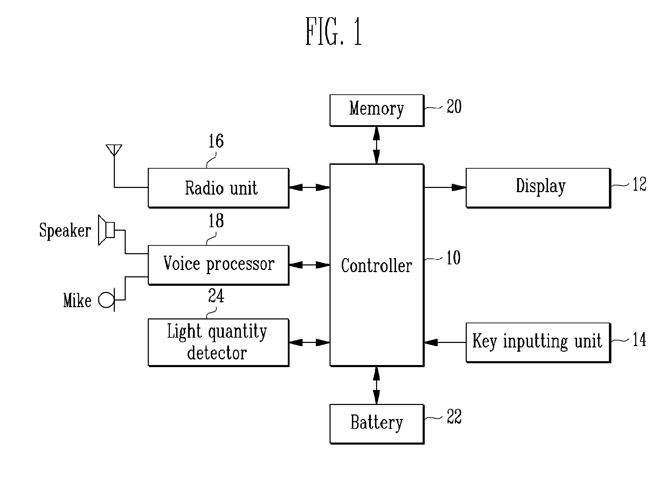

FIG. 1 a block diagram showing a construction of a mobile terminal according to an embodiment of the present invention.

As the mobile terminal, there are various applications, such as a cellular phone (a mobile communication terminal), personal digital assistants (PDAs) and a portable multimedia player (PMP), etc. For convenience, as shown in Fig. 1, a cellular phone of the mobile terminals, that is, a mobile communication terminal will be described as one example.

In one embodiment, the mobile terminal includes: a display 12, for example an organic light emitting display device; a memory 20 adapted to store a graphic user interface (GUI) of low brightness and a controller 10 adapted to convert graphic user interface into a graphic user interface of a low brightness. The mobile terminal further includes a key input unit 14 adapted to determine whether the graphic user interface of a low brightness shall be used by an user input signal and a light quantity detector 24 adapted to detect the amount of ambient of the mobile terminal and adapted to transfer the detected amount of ambient light to the controller 10. The display 12 may formed by any self-emissive display device types.

In one embodiment, in order to perform a role of a mobile terminal, it further includes a key input unit 14 supplying power to each device of the mobile terminal, a radio unit 16, and a voice processor 18.

The key input unit 14, which is a user input unit for interfacing with a user, may comprise various function keys or keys for inputting a call or a character, and may be adapted to output data to the controller 10 corresponding to a key pressed by a user. At this time, the user uses the key input unit 14 to determine (establish) whether the graphic user interface GUI of a low brightness has to be used.

In other words, if the user selects the use of the GUI of low brightness through the key input unit 14, the controller 10 receives it, thereby converting the presently displayed GUI into a GUI of a low brightness and displays the GUI of a low brightness on the display 12.

Meanwhile, if the user does not select to use the GUI of low brightness through the key input unit 14, that is, if the user selects the GUI of a low brightness to be automatically established by an input signal through the key input unit 14, the controller 10, which receives the amount of detected light, compares the detected light value with a preset reference value so that if it is below the reference value, it converts the presently displayed GUI into a GUI of a low brightness and displays it.

As a result, by displaying the GUI of low brightness in places (for example, a theater, a concert hall) capable of assuring visibility even at low brightness such as in dark places, it can be accomplished to eliminate inconvenience due to the display of a GUI of high brightness and reduce power consumption. In this embodiment, the mobile terminal can change the GUI of a high brightness to that of a low brightness based on a user input or based on the detected light value in comparison with a preset reference value. In another embodiment, the mobile terminal may not need the detector 24.

In one embodiment, the GUI of low brightness is stored in the memory 20 and becomes a GUI displaying the same contents as a GUI displayed in a general mode rather than in low brightness while minimizing the power consumption of a battery.

In one embodiment, the GUI of low brightness is applied to a mobile terminal having a self-emissive display such as an organic light emitting display device, wherein it converts a background screen portion occupying many regions of the screen into a black tone, that is, low brightness, and implements an image or a text portion occupying a specified region of the screen at brightness higher than the same brightness.

In one embodiment, the GUI of low brightness is implemented so that in a whole screen displayed on the display, the brightness of R, G and B sub-pixels constituting each pixel corresponding to the background screen is to be below, for example, about 1 cd/m², and the brightness of R, G and B sub-pixels constituting each pixel corresponding to the portions displaying the image or the text is to be about 10 to about 300 cd/m².

In other words, when the GUI of low brightness is displayed by limiting the background screen occupying many regions of the screen to be light-emitted at low brightness, it can light emit even less light than in a general mode, thereby enabling to reduce power consumption.

In one embodiment, the light emitting device may be an active organic light emitting display device.

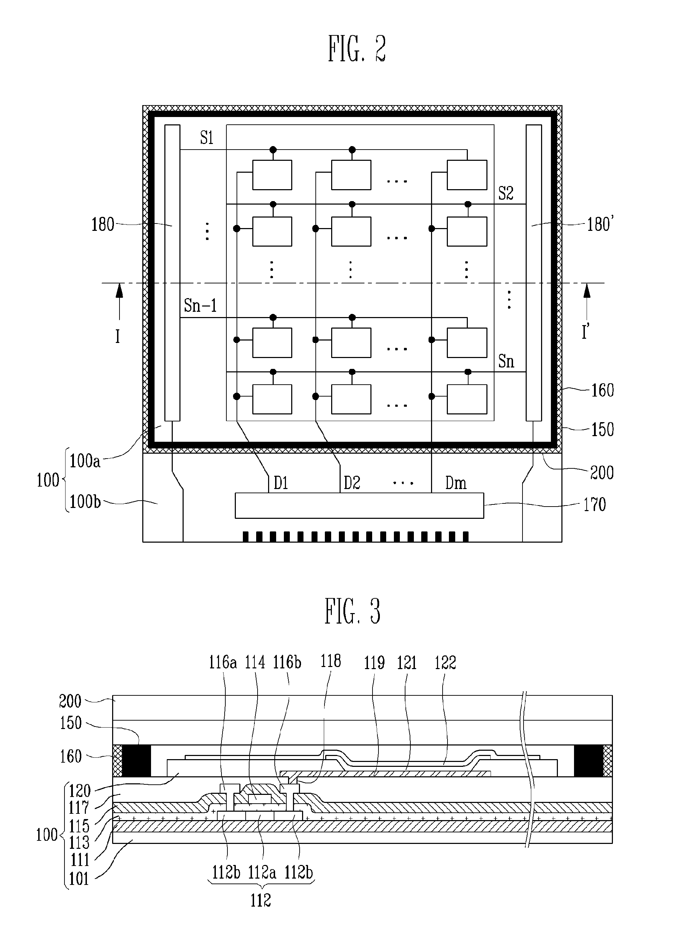

The display displays the GUI for a user input as to whether a user uses low brightness, and the concrete construction of the organic light emitting display device adopted in the display 12 will be described in more detail using the following FIGS. 2 and 3.

Also, the radio unit 16 controls a transmission/reception of voice data and control data under the control of the controller 10.

The voice processor 18 outputs the voice data received from the radio unit 16 through a speaker and outputs a voice signal received from a microphon as data to the radio unit 16, under the control of the controller 10.

Also, when the radio unit 16 receives an incoming call under the control of the controller 10, the voice processor 18 outputs a bell sound through a speaker.

The controller 10 performs a role to control an overall operation of a mobile terminal, and in one embodiment, it performs a control for establishing a GUI of low brightness of a mobile terminal.

If the controller 10 receives the user input as to whether the graphic user interface is used, it converts and establishes it into the graphic user interface of low brightness stored in the memory or receives the light quantity value detected by the light quantity detector 24 and compares it with a preset reference value. If the detected value is below the reference value, it converts and establishes the GUI presently displayed into the GUI of low brightness.

Also, the battery 22 is mounted on a mobile terminal to supply a predetermined power to each device of the mobile terminal.

FIG. 2 is a block diagram showing a construction of an organic light emitting display panel as a display shown in FIG. 1 according to one embodiment and FIG. 3 is a cross-sectional view of a specified region (I-I') in FIG. 2.

Referring to FIGS. 2 and 3, an organic light emitting display device comprises a substrate 100, a sealing substrate 200, a frit material 150 and reinforcing material 160. For convenience, the description will refer to a substrate 100 meaning a substrate including an organic light emitting diode and a deposition substrate 101 meaning a substrate to be a base on which an organic light-emitting diode is formed.

The substrate 100, which is a plate including an organic light emitting element, comprises a pixel region 100a in which at least one organic light emitting configured of a first electrode 119, an organic layer 121 and a second electrode 122 is formed, and a non-pixel region 100 formed in the extension of the pixel region 100a. In the explanation of the following specification, the pixel region 100a means a region in which a predetermined image is displayed due to light emitted from the organic light emitting element, and the non-pixel region 100b means all regions other than the pixel region 100a on the substrate 100.

The pixel region 100a includes a plurality of scan lines (S1 to Sm) arranged in a row direction and a plurality of data lines (D1 to Dm) arranged in a column direction, and a plurality of pixels receiving a signal from a driver integrated circuit for driving the organic light-emitting diode are formed in the scan lines (S 1 to Sm) and the data lines (D 1 to Dm).

Also, in the non-pixel region 100b, a driver IC for driving the organic light emitting element and metal wirings electrically connected to the scan lines (S1 to Sm) and the data lines (D1 to Dm) of the pixel region, respectively, are formed. In one embodiment, the driver IC includes a data driver 170 and scan drivers 180 and 180'.

Also, the organic light emitting element is driven in an active matrix approach and therefore, the structure thereof will be schematically explained with reference to FIG. 3.

A buffer layer 111 is formed on a base substrate 101 in order to prevent the substrate 100 from damaging due to factors such as heat from outside, etc., and the buffer layer 111 is made of insulating material such as silicon oxide SiO₂ or silicon nitride Sinx, etc.

Also, on at least any one region of the buffer layer 111 a semiconductor layer 112 including an active layer 112a and an ohmic contact layer 112b is formed. On the semiconductor layer 112 and the buffer layer 111a gate insulating layer 113 is formed, and on one region of the gate insulating layer 113 a gate electrode 114 having the size corresponding to the width of the active layer 112 is formed.

An interlayer insulating layer 115 is formed on the gate insulating layer 113 including the gate electrode 114, and source and drain electrodes 116a, 116b are formed on a predetermined region on the interlayer insulating layer 115.

The source and drain electrodes 116a,116b are formed to connect to one region wherein the ohmic contact layer 112b is exposed, respectively, and a planarization layer 117 is formed on the interlayer insulating layer 115 including the source and drain electrodes 116a,116b.

On one region of the planarization layer 117 a first electrode 119 is formed and at this time, the first electrode 119 is connected to one region exposed to any one of source and drain electrodes 116a, 116b by means of a via hole 118.

Also, on the planarization layer 117 including the first electrode 119 a pixel defined film 120 having an opening part (not shown) exposing at least one region of the first electrode 119 is formed. On the opening part of the pixel defined film 120 an organic layer 121 is formed, and on the pixel defined film 120 including the organic layer 121 a second electrode layer 122 is formed and at this time, a passivation layer can be further formed on the upper part of the second electrode layer 122.

At this time, since the organic layer 121, which is provided between the first electrode layer 119 and the second electrode layer 122, includes an organic light emitting layer, it forms an excitor being an electron-hole pair by combining a hole supplied from the anode and an electron supplied form the cathode in the organic light emitting layer and is light-emitted by energy generated in returning the excitor back to a ground state.

Here, the generated excitor forms a singlet excitor or a triplet excitor depending on a spin coupling type. The probability that the singlet excitor can be formed is one fourth and the probability that the triplet excitor can be formed is three fourth.

Generally, since a base state of an organic molecule is a singlet state, the organic molecule can be transited to a base state while emitting light by means of the singlet excitor. This is named as fluorescence and to adopt such organic molecule is a fluorescent organic light emitting element.

However, it is prohibited that the triplet excitor is transited to a base state, which is a single state, while emitting light, and thus, the excitor of 75 % is wasted. Accordingly, the triplet excitor can be transited to a base state from a triplet state, while emitting light, by using a phosphorescent dopant with a large spin-orbit coupling in the light emitting layer. This is named as phosphorescence and to adopt such organic molecule is a phosphorescent organic light emitting element.

In one embodiment, any one of the phosphorescent organic light emitting element and the fluorescent organic light emitting element can be adopted as the organic light emitting display device.

Also, the sealing substrate 200, which is a member for sealing at least a pixel region 100a of a substrate on which the organic light emitting element is formed, can be made of transparent material in the case of front side light emitting or both sides light emitting, and be made of opaque material in the case of rear side light-emitting. However, the material of the sealing substrate 200 is not limited thereto. In one embodiment, glass can be used in the case of the front side light-emitting.

In one embodiment, the sealing substrate 200 is configured as a plate-type, and the sealing substrate 200 seals at least a pixel region of a substrate on which the organic light emitting element is formed. In one embodiment, every region other than a pad unit of the data driver is sealed.

The frit 150, which is formed in the space between the sealing substrate 200 and the non-pixel region 100b of the substrate 100, encapsulates the pixel region 100a so that air cannot be infiltrated. The frit originally means glass raw material including additives in the form of a powder, however, in the glass technical field it commonly means glass formed by melting the frit. In one invention it may be used by including both of them.

The frit 150, which is made in a closed-curve form at a constant interval from an edge of a side bonding the sealing substrate to the substrate 100, is configured of glass material, moisture absorbent for absorbing laser, and a filler for reducing thermal expansion coefficient. The frit 150 is applied to the sealing substrate 200 in a frit paste state and is cured after being melted between the sealing substrate 200 and the substrate 100 by laser or infrared rays and cured, encapsulating the sealing substrate 200 and the substrate 100.

In one embodiment, the moisture absorbent includes a compound including a transition metal, and, for example, it can include V₂O₅.

In one embodiment, the line to be formed by the frit is from about 0.5mm to about 1.5mm in width. In the case of about 0.5mm or less, a defect can frequently be occurred when sealing and a problem can be caused even in adhesion and in the case of about 1.5mm or more, a dead space of an element becomes large so that the product quality is deteriorated.

In another embodiment, the thickness of the frit 150 is from about 10µ to about 20µ. In case that the thickness of the frit is about 20µ or more, a large amount of energy may be required for sealing a large amount of the frit 150 at the time of laser sealing. In this embodiment, the power of laser may be heightened or the speed of the scan may be lowered, resulting in that thermal damage may be generated. Also, in the case of about 10µ or less in thickness, a defect of a frit application state can frequently be occurred.

The construction and the material of a side of the substrate 100 to which the frit 150 is directly connected are not limited to the above examples. In one embodiment, the side of the substrate is not overlapped with metal wiring other than an interval of metal wiring directly connected to the driver integrated circuit, if possible. Since the frit 150 is irradiated by the laser or the infrared rays as described above, the metal wiring may be damaged when the frit 150 is overlapped with the metal wiring.

In one embodiment, the reinforcing material 160, which is formed on a side of a line of the frit 150, prevents the organic light emitting display device from easily breaking when all the substrate 100, the sealing substrate 200 and the frit 150 are glass, and serves as encapsulating material when the frit 150 is not adhered by being melted and its adhesion is weaken. The reinforcing material 160 can be formed by spacing from the frit 150 at a predetermined interval or by contacting to the frit 150.

As material of the reinforcing material 160, resins which are naturally cured, thermally cured or UV cured by being applied in liquid state, can be used. For example, acrylate cyanide as material to be naturally cured, acrylate as material to be thermally cured at a temperature less than 80°C and epoxy, acrylate and urethane acrylate as material to be UV cured can be used.

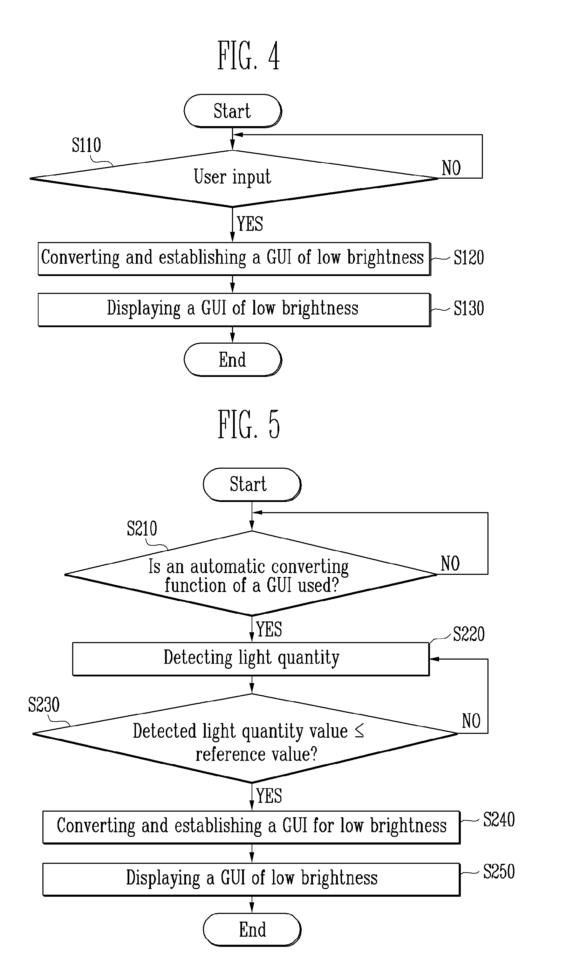

FIG. 4 is a flowchart illustrating a control method of a mobile terminal according to an embodiment of the present invention.

Referring to FIGs. 1 and 4, a user inputs by selecting the GUI displayed on the display 12 to be used as the low brightness GUS through the key input unit 14 of the mobile terminal (S 110).

In one embodiment, the display 12 is implemented as an organic light emitting display device and displays a menu allowing the key input unit 14 to select the GUI of low brightness.

If the selection of the GUI of low brightness inputs, the controller 10 receives it to convert and establish the GUI presently displayed to the GUI of low brightness (S 120) and displays the converted and established GUI of low brightness on the display 12 implemented as the self-emission element (S 130).

In the FIG. 4 embodiment, when assuring sufficient visibility by the GUI of low brightness, it can be accomplished to eliminate inconvenience due to the display of a GUI of high brightness and reduce power consumption by displaying the GUI of low brightness in places capable of assuring visibility even at low brightness such as in a theater, etc.

FIG. 5 is a flowchart illustrating a control method of a mobile terminal according to another embodiment of the present invention.

Referring to FIG. 1 and 5, it is first judged whether an automatic converting function of a GUI of low brightness is used (S 210).

In one embodiment, the use of the automatic converting function of the GUI of low brightness is made in the case that a user does not directly select the GUI of low brightness in the menu displayed on the display 12 through the key input unit 12 or in the case that a user selects the automatic converting function of the GUI of low brightness in the menu displayed on the display 12.

When the use of the automatic converting function of the GUI of low brightness is requested, the light quantity detector 24 detects light quantity from the external (S220).

The light quantity value detected in the light quantity detector 24 is transferred to the controller 24 and the controller 10 compares the detected light quantity value with the preset reference value (S230).

By the comparison of the detected light quantity value and the preset reference value, if it is judged that the detected light quantity value is below the reference value, the GUI of low brightness stored in the memory is converted and established (S240).

As a result, the GUI displayed on the display 12 displays the converted and established GUI of low brightness (S250).

In other words, in case of places (for example, a theater, a concert hall) capable of assuring visibility even at low brightness such as in dark places, the detected light quantity value is smaller than the preset reference value to display the GUI of low brightness, thereby enabling to eliminate inconvenience due to the display of the GUI of and reduce power consumption.

At this time, the GUI of low brightness becomes a GUI displaying the same contents as a GUI displayed in a general mode while minimizing the power consumption of a battery.

In one embodiment, the GUI of low brightness is applied to the case adopting, for example, an organic light emitting display device, wherein it is implemented by converting a white tone occupying many regions of the screen, that is, a background screen portion having high brightness, into a black tone, that is, low brightness, and converting an image and a text portion of a black tone occupying a specified region of the screen into a white tone.

In one embodiment, the GUI of low brightness is characterized in that in a whole screen displayed on the display, the brightness of R, G and B sub-pixels constituting each pixel corresponding to the background screen is implemented to be below about 1 cd/m², and the brightness of R, G and B sub-pixels constituting each pixel corresponding to the portions displaying the image or a text is implemented to be about 10 to about 300 cd/m².

However, such the GUI of low brightness can obtain an effect to reduce power consumption only when it is applied to an organic light emitting display device, which is a self-emission element.

In other words, when the GUI of low brightness is displayed by limiting the background screen portion occupying many regions of the screen to be light-emitted at low brightness, it can light emit even less light than in a general mode, thereby enabling to reduce power consumption.

According to at least one embodiment, in the mobile terminal adopting a self-emissive display, it can provide diversity of selection on graphic user interfaces in places capable of assuring visibility even at low brightness such as in dark places, eliminate inconvenience due to high brightness, and reduce power consumption, by implementing at least one of the plurality of graphic user interfaces as a GUI of low brightness.

While the above description has pointed out novel features of the invention as applied to various embodiments, the skilled person will understand that various omissions, substitutions, and changes in the form and details of the device or process illustrated may be made without departing from the scope of the invention. Therefore, the scope of the invention is defined by the appended claims rather than by the foregoing description. All variations coming within the meaning and range of equivalency of the claims are embraced within their scope.

## Claims

1. A mobile terminal, comprising:
a self-emissive display unit (12) configured to display an image;
a memory (20) configured to store image data of first and second image portions, wherein each of the stored image data includes at least respective color data and respective brightness data; and
a controller (10) configured to display the stored image data on the display unit (12) in one of first mode and second mode,
wherein, in the first mode: the image data of first and second image portions are displayed on the display unit (12) with a first brightness corresponding to their respective brightness data, and
wherein, in the second mode: the image data of first image portion are displayed on the display unit (12) with a first brightness corresponding to their respective brightness data, and the image data of second image portion are displayed on the display unit (12) with a second brightness being lower than a brightness corresponding to their respective brightness data.

2. The mobile terminal as claimed in claim 1, wherein the mobile terminal furthermore comprises an inputting unit (14) and wherein the mobile terminal is adapted to be switched from the first mode into the second mode by a first user input signal from the inputting unit (14) and to be switched from the second mode into the first mode by a first user second signal from the inputting unit (14).

3. The mobile terminal according to one of the preceding claims, further comprising a sensor (24) which is adapted to be activated by a third user input signal from the inputting unit (14) and configured to detect an ambient brightness level, wherein, when the detected ambient brightness level is less than a reference level and the controller (10) displays stored image data in the first mode, the controller (10) is switched from the first mode into the second mode, and wherein, when the detected ambient brightness level is greater than a reference level and the controller (10) displays stored image data in the second mode, the controller (10) is switched from the second mode into the first mode.

4. The mobile terminal according to one of the preceding claims, wherein the second brightness is less than 1 cd/m².

5. The mobile terminal according to one of the preceding claims, wherein the first brightness is in the range of 10 to 300 cd/m².

6. The mobile terminal according to one of the preceding claims, wherein the second brightness is continuously adapted between 0 cd/m² and 1 cd/m² according to the detected ambient brightness level, wherein the second brightness is adapted to 0 cd/m² when the detected ambient brightness level amount to 0 cd/m² and the second brightness is adapted to 1 cd/m² when the detected ambient brightness level amount to the reference level.

7. The mobile terminal according to one of the preceding claims, wherein the first brightness is continuously adapted between 10 cd/m² and 300 cd/m² according to the detected ambient brightness level, wherein the first brightness is adapted to 10 cd/m² when the detected ambient brightness level amount to 0 cd/m² and the first brightness is adapted to 10 cd/m² when the detected ambient brightness level amount to the reference level.

8. The mobile terminal according to one of the preceding claims, wherein the inputting unit (14) is adapted to receive a first user input signal from a user for the activation of the second mode, and adapted to receive a second user input signal from a user for the activation of the first mode and adapted to receive a third user input signal from a user for the activation ambient brightness sensor (24) automatically controlling first and second mode according to the detected ambient brightness.

9. The mobile terminal according to one of the preceding claims, wherein the memory (20) is adapted to receive image data for the self-emissive display unit (12) and adapted to divide the received image data into a first image portion and a second image portion, wherein the first image portion corresponds with a non-background portion and the second image portion corresponds with a background portion.

10. The mobile terminal according to claim 9, wherein the non-background portion includes at least one of the following: a stilled image, a video image and text.

11. The mobile terminal according to one of claims 9 and 10, wherein memory (20) comprises a brightness level detector for detecting the brightness levels of the received video signals for all pixels of the received image data,
and for setting a pixel to be in a background portion when the condition (i)
(i) at least a first number of all pixels have the same brightness level as the brightness level of the pixel and when at least a second number of contiguous pixels including the pixel have the same brightness level as the brightness level of the pixel,
is met and for setting a pixel to be in a non-background portion when the condition (i) is not met.

12. The mobile terminal according to claim 11, wherein, when the lowest brightness level is set to 0 and the highest brightness level is set to Nmax, a first pixel having a first brightness level N1 and a second pixel having a second brightness level N2 are set to have the same brightness level when the absolute value (N1-N2)/Nmax is less 0,02 or when the absolute value (N1-N2)/Nmax is less 0,01.

13. The mobile terminal according to one of claims 11 and 12, wherein the first number corresponds to 30 percent of the total number of pixels the self-emissive display unit (12), or the first number corresponds to 40 percent of the total number of pixels the self-emissive display unit (12), or the first number corresponds to 50 percent of the total number of pixels the self-emissive display unit (12) or the first number corresponds to 60 percent of the total number of pixels the self-emissive display unit (12).

14. The mobile terminal according to one of claims 11 - 13, wherein the second number corresponds to 1 percent of the total number of pixels the self-emissive display unit (12), or the second number corresponds to 5 percent of the total number of pixels the self-emissive display unit (12), or the second number corresponds to 10 percent of the total number of pixels the self-emissive display unit (12) or the second number corresponds to 20 percent of the total number of pixels the self-emissive display unit (12).

15. A method of controlling a mobile terminal, comprising:
displaying, at a self-emissive display unit, an image which includes a background portion and a non-background portion; and
controlling the self-emissive display unit such that the brightness of the non-background portion is higher than that of the background portion.

16. The method of claim 15, further comprising receiving user input, wherein the controlling is performed based on the user input.

17. The method according to one of claims 15 and 16, further comprising detecting an ambient brightness level, wherein the controlling is performed based on the detecting.
